# EUROPEAN PATENT SPECIFICATION

(11) **EP 3 136 821 B1**
(45) Date of publication and mention of the grant of the patent: **21.11.2018**
(21) Application number: 16173705.1
(22) Date of filing: 09.06.2016
(51) Int. Cl.: H05B 6/06, A47J 36/24

(54) **METHOD AND DEVICE FOR HEATING A TANK OF AN INDUCTION COOKING EQUIPMENT**
VERFAHREN UND VORRICHTUNG ZUR ERWÄRMUNG EINES TANKS EINER INDUKTIONSKOCHAUSRÜSTUNG
PROCÉDÉ ET DISPOSITIF POUR CHAUFFER UN RÉSERVOIR D'UN ÉQUIPEMENT DE CUISSON PAR INDUCTION

(30) Priority: 31.08.2015 CN 201510549421
(43) Date of publication of application: 01.03.2017
(73) Proprietor: Xiaomi Inc., Beijing 100085 (CN)
(72) Inventor: WU, Ke, 100085 BEIJING (CN); LIU, Xinyu, 100085 BEIJING (CN)
(74) Representative: Perrot, Emilie

(56) References cited:
- EP-A1- 2 020 826
- EP-A1- 2 034 801
- EP-A2- 2 222 133
- CN-A- 104 503 328
- CN-A- 104 523 133
- CN-U- 204 287 865
- CN-Y- 201 015 532
- JP-A- 2003 083 543

## Description

### TECHNICAL FIELD

The present invention generally relates to the field of home furnishing electronic technology, and more particularly to a method and a device for heating a tank of an induction cooking equipment.

### BACKGROUND

A cooking equipment can heat the food by converting electric energy to heat energy so as to achieve the goal of cooking. In a cooking equipment, performing electric-to-heat conversion by adopting "a heating plate" refers to transferring the heat to a tank in which the food are placed in a cooking equipment by the heating plate after heating the heating plate by electric energy, then heating the food by the tank.

However, although a heating plate has a simple structure and is easy to be controlled, the problems of uneven heating, poor temperature control accuracy and the like exist.

Document EP 2 222 133 describes a cooking plate, a GN food container, and a combination of same and method for cooking or convenience cooking food with such a combination. Document JP 2003 083543 describes a safety device for heating a cooking apparatus. Document EP 2 020 826 describes an induction heating cooker, method and program.

### SUMMARY

Method, device and electronic device for heating a tank of an induction cooking equipment are provided in the invention, so as to address the deficiency in prior arts.

According to a first aspect, the invention relates to a method for heating a tank of an induction cooking equipment is provided, comprising: determining a material type of a tank; and selecting a voltage change curve matching with the material type for use in a cooking process of the induction cooking equipment which the tank belongs to.

In an embodiment not being part of the claimed invention the step of determining a material type of the tank may include: acquiring the material type contained in a barcode graph on a surface of the tank.

In another embodiment not being part of the claimed invention the step of acquiring the material type contained in a barcode graph on a surface of the tank may include: acquiring and analyzing the barcode graph to acquire the material type contained in the barcode graph; or receiving an assisting message sent by a mobile device, the assisting message comprising the material type of the tank; wherein, the material type is acquired by acquiring and analyzing the barcode graph by the mobile device.

In yet another embodiment not being part of the claimed invention the step of determining a material type of the tank may include: receiving a notification message sent by an electronic label on the tank, the notification message comprising the material type of the tank.

According to the invention when the surface of the tank comprises a physical structure corresponding to its own material type, the step of determining a material type of the tank includes: detecting a physical structure of a surface of the tank by a detection structure in an equipment body of the induction cooking equipment after the tank is installed into the equipment body so as to determine the material type of the tank.

Also according to the invention the physical structure is a bulge structure on the bottom of the tank, the material type corresponding to the location of the bulge structure on the bottom of the tank; the detection structure is a plurality of sunken structures on the bottom of the inside of the equipment body, and the plurality of sunken structures matching with bulge structures corresponding to a plurality of material types respectively; the step of detecting a physical structure of the surface of the tank by a detection structure in an equipment body of the induction cooking equipment may include: determining a corresponding material type according to a sunken structure in the detection structure matching with a bulge structure on the bottom of the tank after the tank is installed into the equipment body of the induction cooking equipment.

In a particular embodiment, the voltage change curve is generated according to received configuration instructions or is downloaded from a server.

According to a second aspect, the invention relates to a device for heating a tank of an induction cooking equipment is provided, including: a determination unit configured to determine a material type of a tank; and a selection unit configured to select a voltage change curve matching with the material type for use in a cooking process of the induction cooking equipment which the tank belongs to.

In an embodiment not being part of the claimed invention the determination unit may include: an acquisition sub-unit configured to acquire the material type contained in a barcode graph on a surface of the tank.

In another embodiment not being part of the claimed invention the acquisition sub-unit may include an analysis module or a receiving module; wherein, the analysis module is configured to acquire and analyze the barcode graph to acquire the material type contained in the barcode graph; and the receiving module is configured to receive an assisting message sent by a mobile device, the assisting message comprising the material type of the tank; wherein, the material type is acquired by acquiring and analyzing the barcode graph by the mobile device.

In yet another embodiment not being part of the claimed invention the determination unit may include: a message receiving sub-unit configured to receive a notification message sent by an electronic label on the tank, the notification message comprising the material type of the tank.

According to the invention when the surface of the tank comprises a physical structure corresponding to its own material type, the determination unit includes: a type detection sub-unit configured to detect a physical structure of a surface of the tank by a detection structure in an equipment body of the induction cooking equipment after the tank is installed into the equipment body so as to determine the material type of the tank.

Also according to the invention the physical structure is a bulge structure on the bottom of the tank, the material type corresponding to the location of the bulge structure on the bottom of the tank; the detection structure is a plurality of sunken structures on the bottom of the inside of the equipment body, and the plurality of sunken structures matching with bulge structures corresponding to a plurality of material types respectively; the type detection sub-unit may include: a determination module configured to determine a corresponding material type according to a sunken structure in the detection structure matching with a bulge structure on the bottom of the tank after the tank is installed into the equipment body of the induction cooking equipment.

In a particular embodiment, the voltage change curve is generated according to received configuration instructions or is downloaded from a server.

According to a third aspect, the invention relates to an electronic device is provided, including: a processor and a memory for storing processor-executable instructions, wherein the processor is configured to: determine a material type of a tank; and select a voltage change curve matching with the material type for use in a cooking process of an induction cooking equipment which the tank belongs to.

In a particular embodiment, the steps of the method for heating a tank of an induction cooking equipment are determined by computer program instructions.

Consequently, according to a fourth aspect, the invention is also directed to a computer program for executing the steps of a method for heating a tank of an induction cooking equipment as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present invention may include the following beneficial effects: by determining a material type of a tank, different material types of tanks can obtain same or similar heating result by selecting a voltage change curve matching with a material type of a tank, and an induction cooking equipment can be compatible with different material types of tanks.

It is to be understood that both the forgoing general description and the following detailed description are exemplary only, and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of heating a tank of an ordinary cooking equipment according to the prior art.
Fig. 2 is a schematic diagram of heating a tank of an induction cooking equipment according to the prior art.
Fig. 3 is a schematic diagram of a cooking curve according to the prior art.
Fig. 4 is a schematic diagram of a voltage change curve according to the prior art.
Fig. 5 is a flow chart illustrating a method for heating a tank of an induction cooking equipment according to an exemplary embodiment.
Fig. 6 is a schematic diagram illustrating a method for identifying a material type of a tank according an embodiment not being part of the claimed invention.
Fig. 7 is a schematic diagram illustrating another method for identifying a material type of a tank according to an embodiment not being part of the claimed invention.
Fig. 8 is a schematic diagram illustrating still another method for identifying a material type of a tank according to an embodiment not being part of the claimed invention.
Fig. 9 is a schematic diagram illustrating still another method for identifying a material type of a tank according to the invention.
Figs. 10 to 15 are block diagrams illustrating a device for heating a tank of an induction cooking equipment according to exemplary embodiments.
Fig. 16 is a structural schematic diagram illustrating a device for heating a tank of an induction cooking equipment according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

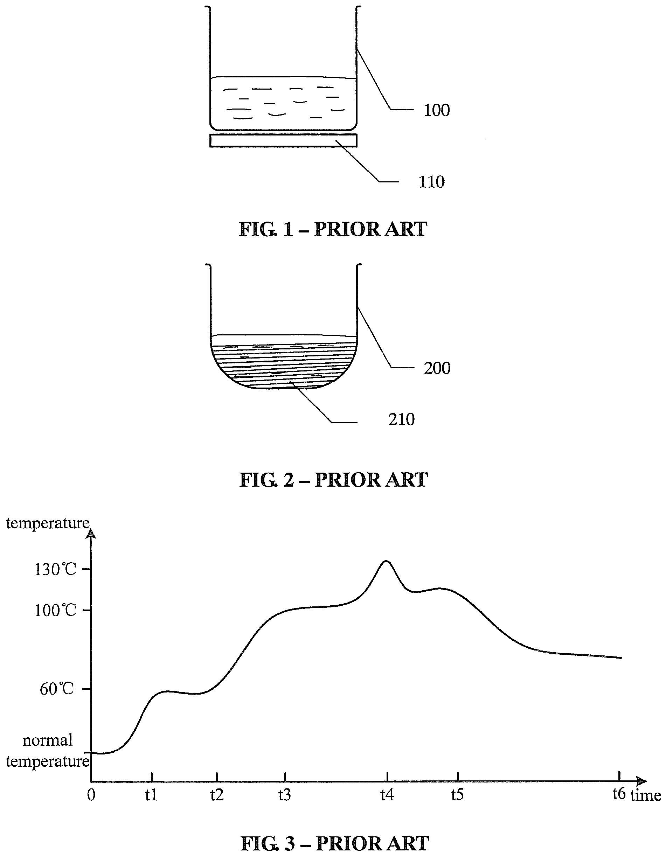

Fig. 1 is a schematic diagram of heating a tank of an ordinary cooking equipment according to the prior art. As shown in Fig. 1, in an ordinary cooking equipment, the function of heating a tank 100 is achieved by adopting a heating plate 110. Specially, a heating plate may be equivalent to a resistor, and a heating plate can be heated when electric energy is outputted to the heating plate. Then the heating plate can transfer heat to a tank, and finally the tank can transfer heat to the food within the tank so as to achieve the heating and cooking of the food.

As mentioned in background, an ordinary cooking equipment using a heating plate may cause the problems of uneven heating, poor temperature control accuracy and the like, this may affect cooking effect.

In view of the fact in prior arts, an induction cooking equipment using Induction Heating (IH) is further provided in prior arts. As shown in Fig. 2, high frequency alternating current may be transferred to electromagnetic coils 210 according to predefined voltage change curve, so that the electromagnetic coils may cause high frequency alternative magnetic field. The high frequency alternative magnetic field may drive microcrystalline structure in magnetic metal material in a tank 200 to generate vortex, so as to heat the food directly with heat through fiction among vortex generated by numerous microcrystalline structures.

Users always want to achieve the same cooking effect when cooking the same food. For example, Fig. 3 shows a cooking curve actually required for the food as "rice" in the process of "cooking rice", the cooking curve may include: a pre-heating phase under normal temperature during the time period from 0 to t1; a water absorption phase under middle temperature of 60°C during the time period from t1 to t2; a heating phase under big fire that the temperature is heated to 100°C during the time period from t2 to t3; a boiling phase that the temperature is heated to 130°C during the time period from t3 to t4; a braising phase under high temperature during the time period from t4 to t5; a heat preservation phase during the time period from t5 to t6. As such, the same cooking effect can be achieved if an induction cooking equipment can make the heat received by the "rice" in the cooking process of "cooking rice" conform to the cooking curve shown in Fig.3. In other words, the same cooking effect can be achieved even if different tanks are used if it's ensured that the heating power of a tank in an induction cooking equipment always conform to the heat required for a cooking curve corresponding to current food and current cooking method.

Based on the equation for calculating power P=U/I=U²/R (P is power, U is voltage, I is current, R is resistance), it can be known that: in the case of the same U, if it's needed to produce the same heating power P, then it's needed to ensure that the resistances R of the tanks are the same. However, the resistivity ρ of the tanks are always different when the tanks are of different material types. As the value of the resistance R is proportional to that of the resistivity ρ, if the resistivity ρ of the material type of a tank is larger, then the corresponding resistance R is larger. As such, in the case of the same U, the power will be smaller, thus it may not be ensured that the heating power of a tank always conform to the requirement of the cooking curve shown in Fig. 3.

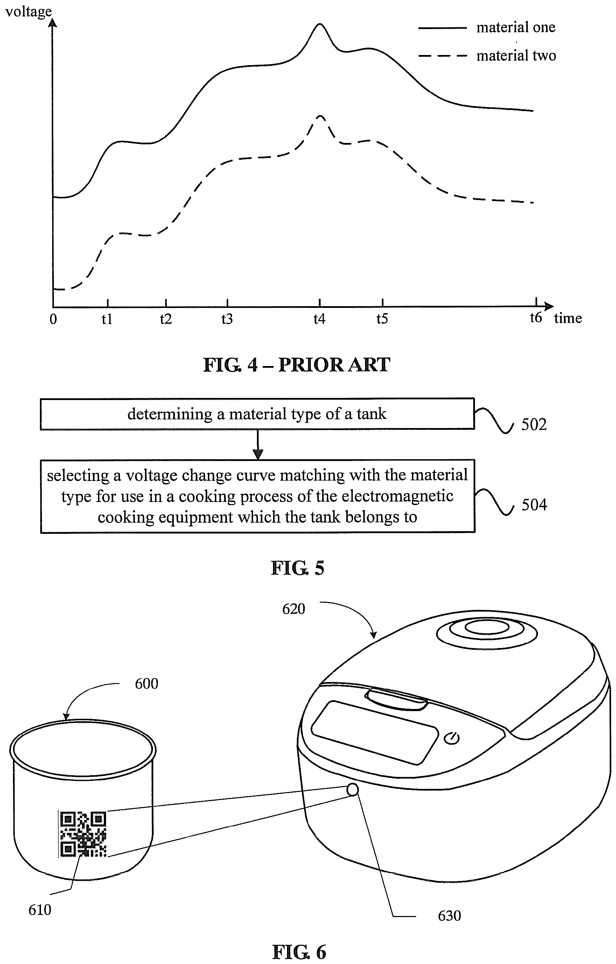

As such, in the case of the material types of the tanks are different, the value of the real voltage U should be determined according to the material type of a tank and the corresponding resistivity ρ, so as to different material types of tanks can generate the same heating power P. For example, in Fig. 4, when two kinds of tanks are made by using material one and material two respectively, it's assumed that the resistivity ρ of material one is greater than the resistivity ρ of material two, then a larger voltage U1 is needed to be applied to the tank consist of material one and a smaller voltage U2 is needed to be applied to the tank consist of material two, so that the two tanks can obtain the same heating power P at the same time point. In other words, for the tanks using different material types, different voltage change curves should be used when performing the same cooking operation on the same food, so as to ensure that the same cooking effect may be achieved.

However, the induction cooking equipment in prior arts only takes into account the change of the food or cooking method, and does not take into account the support of different material types of tanks in a same induction cooking equipment, leading to that different material types of tanks always use same voltage change curve when performing the same cooking operation on the same food, thus leading to that the heat received by the food are different and may not always conform to the requirement of the heating curve shown in Fig. 3.

Therefore, the present invention improves the heating process of an induction cooking equipment, so as to address above technical problems in prior arts.

Fig. 5 is a flow chart illustrating a method for heating a tank of an induction cooking equipment according to an exemplary embodiment. As shown in Fig. 5, the method is performed by an induction cooking equipment, and may include the following steps:
In step 502, determining a material type of a tank.

In step 504, selecting a voltage change curve matching with the material type for use in a cooking process of the induction cooking equipment which the tank belongs to.

In the above embodiment, by determining a material type of a tank, different material types of tanks can obtain the same or similar heating result by selecting a voltage change curve matching with a material type of a tank, and an induction cooking equipment can be compatible with different material types of tanks.

In the technical solutions of the present invention, a material type of a tank may be identified by various methods. Several possible implementations thereof will be described in detail in the following together with other embodiments not being part of the claimed invention. Of course, other methods capable of identifying a material type of a tank may be used in the embodiments of the present invention, and the present invention is not limited to the following methods.

### Embodiment 1: barcode identification

As an embodiment not being part of the claimed invention the material type of a tank contained in a barcode graph on a surface of the tank can be acquired.

In the present embodiment, a barcode graph (for example, two-dimension code 610, 710 shown in Figs. 6-7) is generated on an external surface of the tank (or any other positions such as a surface of a packing box of the tank) during the process of producing a tank by a manufacturer. The barcode graph contains the material type of the tank. As such, the material type of the tank can be read by collecting and identifying the barcode graph.

Correspondingly, based on the cooking methods (each having a corresponding cooking curve) supported by an induction cooking equipment, each method may have a corresponding voltage change curve for various material types, so as to ensure that these material types of tanks can achieve same or similar cooking effect in the case of same cooking method. Therefore, after a material type of current tank is determined according to a barcode graph, a voltage change curve corresponding to the material type can be selected correctly, so that the heating power generated by the tank can conform to the heat required for the corresponding cooking curve.

### 1. direct identification

In another embodiment not being part of the claimed invention an induction cooking equipment can acquire and analyze a barcode graph on a tank directly, so as to acquire the material type of the tank contained in the barcode graph.

For example, an induction cooking equipment may be "an electric cooker", and a barcode graph on a tank may be "two-dimensional code". As shown in Fig. 6, a barcode graph 610 is printed or pasted on a surface of a tank 600, and the electric cooker 620 may be configured with a barcode identification device 630 such as a camera. The barcode identification device can collect the graph of a barcode graph and identify the material type contained in the graph by making the barcode graph towards to the barcode identification device.

For example, it's assumed that a material type of "100012" is acquired after identifying the barcode graph by the barcode identification device, for example, when the material type corresponding to "100012" is "material one", then a voltage change curve corresponding to material one in Fig.4 should be used when the electric cooker selects the tank to perform a cooking operation of "cooking rice" on the "rice".

### 2. assisting identification

In yet another embodiment not being part of the claimed invention an induction cooking equipment can receive an assisting message sent by a mobile device, the assisting message comprising the material type of the tank; wherein, the material type is acquired by acquiring and analyzing the barcode graph on the tank by the mobile device.

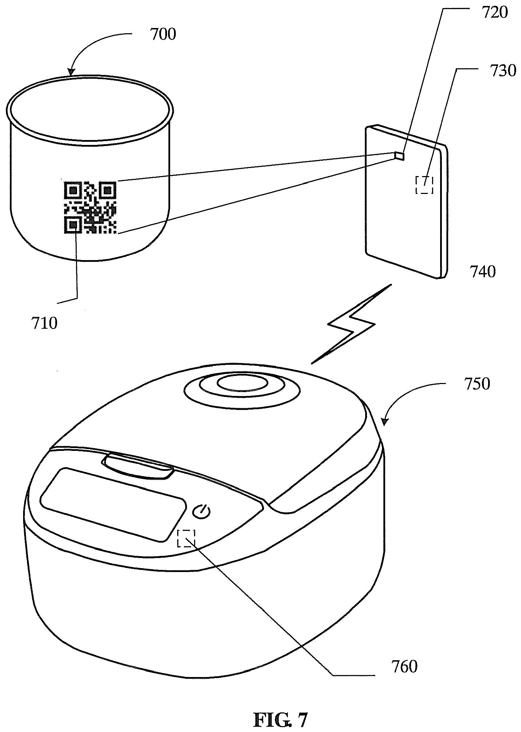

For example, an induction cooking equipment may be "an electric cooker", a mobile device may be a smart phone, and a barcode graph on a tank may be "two-dimensional code". As shown in Fig. 7, a barcode graph 710 is printed or pasted on a surface of a tank 700. The smart phone 740 can collect the graph of a barcode graph and identify the material type contained in the graph by a camera 720. Accordingly, the electric cooker 750 may not have to be configured with a barcode identification device such as a camera.

For example, it's assumed that a material type contained in two-dimensional code on a tank read by a smart phone is"100012", then the smart phone needs to send the material type to the electric cooker. So the smart phone 740 and the electric cooker 750 should be configured with a communication module 1 (730) and a communication module 2 (760) respectively. The smart phone can send the type material "100012" to the electric cooker through the communication connection between the communication module 1 and the communication module 2. Then the electric cooker can know the material type of the tank and select a corresponding voltage change curve.

### Embodiment 2: label reading

In yet another embodiment not being part of the claimed invention an induction cooking equipment can receive a notification message sent by an electronic label on the tank, the notification message comprising the material type of the tank.

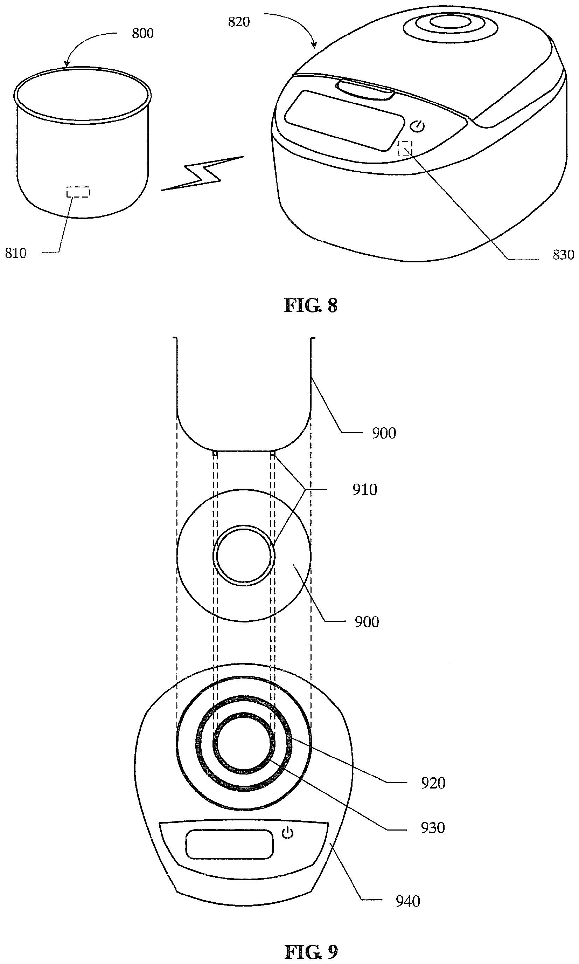

In the present embodiment, an electronic label (for example, RFID label shown in Figs. 8) is added to an external surface of the tank (or any other positions such as a surface of a packing box of the tank) during the process of producing a tank by a manufacturer. The electronic label contains the information on the material type of the tank. As such, the material type of the tank can be determined by activating the electronic label and receiving a notification message sent by the electronic label.

For example, an induction cooking equipment may be "an electric cooker", and an electronic label may be "RFID label". As shown in Fig. 8, a RFID label 810 may be disposed on a surface of the tank 800, the RFID label comprising the material type of the tank, and the electric cooker 820 may be configured with a RFID reader 830. When the tank is placed adjacent to the electric cooker, making the RFID label enter the reading range of the RFID reader in the electric cooker can activate the RFID label, so as to receive a notification message sent by the RFID label, the notification message comprising the material type of the tank.

Therefore, users neither need to take into account a material type of a tank nor a fitting process between an electric cooker and a tank, users only need to put the tank into an electric cooker, then the electric cooker can read the information about a material type from the RFID label automatically by the RFID reader, and then select a corresponding voltage change curve.

### Embodiment 3: physical structure

According to the invention a surface of a tank can be configured to have a physical structure corresponding to its own material type, then a physical structure of a surface of the tank can be detected by a detection structure in an equipment body of the induction cooking equipment after the tank is installed into the equipment body, so as to determine the material type of the tank.

The "physical structure" of a tank may have various forms. Different material types of tanks need to correspond to different forms of physical structure, so as to distinguish among different material types of tanks clearly.

For example, assuming that the physical structure is a bulge structure on the bottom of the tank. As shown in Fig. 9, the bulge structure 910 may be an annular bulge on the bottom of the tank 900, a material type of a tank corresponding to the location of the annular bulge on the bottom of the tank. For example, the radiuses of the annular bulge corresponding to different material types of tank are different. Accordingly, the detection structure may be a plurality of sunken structures 920, 930 on the bottom of the inside of the equipment body 940, and the plurality of sunken structures matching with bulge structures corresponding to a plurality of material types respectively. For example, the bottom of the inside of an equipment body shown in Fig. 9 may be configured with a first sunken structure having a smaller radius and a second sunken structure having a larger radius respectively.

As such, after the tank is installed into the equipment body of the electric cooker, a bulge structure on the bottom of the tank can only match with one of the sunken structures on the bottom of the inside of the equipment body. Since the material type corresponding to each sunken structure is known, the material type of the tank can be determined by determining the sunken structure matching with the bulge structure. As shown in Fig. 9, the bulge structure on the bottom of the tank corresponds to the first sunken structure in the equipment body, then it can be determined that the tank is made of "material one". Then a voltage change curve corresponding to material one in Fig.4 should be used when the electric cooker selects the tank to perform a cooking operation of "cooking rice" on the "rice".

In the present embodiment, by using annular bulge structure and sunken structure, users don't need to take into account the problems of installing direction and posture and the like and only need to make the bottom of the tank face down when putting the tank into the equipment body, so as to aim at the sunken structure 1 (930) directly without rotating to adjust in a horizontal direction, which may be useful for simplifying the user operation.

Moreover, in the technical solutions of the present invention, a voltage change curve in an induction cooking equipment may be from a variety of sources. For example, a voltage change curve may be pre-stored in an induction cooking equipment by a manufacturer. Or, users can create a new voltage change curve according to the actual demand and import it into an induction cooking equipment. Users can also edit and adjust existing voltage change curve in an induction cooking equipment. Users can import new voltage change curve into an induction cooking equipment by creating or editing a voltage change curve on a mobile device after connecting to the induction cooking equipment by the mobile device such as a smart phone. Or, an induction cooking equipment can be connected to Internet, so that the induction cooking equipment can download a voltage change curve from a server. The voltage change curve may be from a manufacturer, and may also be from other users, such as social friends of current user and the like. In fact, any methods capable of importing a voltage change curve into an induction cooking equipment may be used in the embodiments of the present invention, and the present invention is not limited to the above methods.

The present invention further provides embodiments of a device for displaying information corresponding to the foregoing embodiments of a method for displaying information.

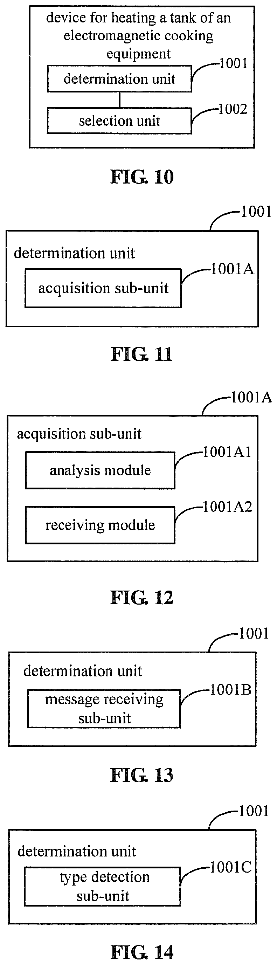

Fig. 10 is a block diagram illustrating a device for heating a tank of an induction cooking equipment according to an exemplary embodiment. Referring to Fig. 10, the device may include a determination unit 1001 and a selection unit 1002. The determination unit 1001 is configured to determine a material type of a tank; and the selection unit 1002 is configured to select a voltage change curve matching with the material type for use in a cooking process of the induction cooking equipment which the tank belongs to.

Alternatively, the voltage change curve is generated according to received configuration instructions or is downloaded from a server.

As shown in Fig. 11, Fig. 11 is a block diagram illustrating another device for heating a tank of an induction cooking equipment according to an exemplary embodiment. Based on the foregoing embodiment shown in Fig. 10, the determination unit 1001 may include an acquisition sub-unit 1001A. The acquisition sub-unit 1001A is configured to acquire the material type contained in a barcode graph on a surface of the tank

As shown in Fig. 12, Fig. 12 is a block diagram illustrating another device for heating a tank of an induction cooking equipment according to an exemplary embodiment. Based on the foregoing embodiment shown in Fig. 11, the acquisition sub-unit 1001A may include an analysis module 1001A1 or a receiving module 1001A2. The analysis module 1001A1 is configured to acquire and analyze the barcode graph to acquire the material type contained in the barcode graph; and the receiving module 1001A2 is configured to receive an assisting message sent by a mobile device, the assisting message comprising the material type of the tank; wherein, the material type is acquired by acquiring and analyzing the barcode graph by the mobile device.

As shown in Fig. 13, Fig. 13 is a block diagram illustrating another device for heating a tank of an induction cooking equipment according to an exemplary embodiment. Based on the foregoing embodiment shown in Fig. 10, the determination unit 1001 may include a message receiving sub-unit 1001B. The message receiving sub-unit 1001B is configured to receive a notification message sent by an electronic label on the tank, the notification message comprising the material type of the tank.

It's to be noted that the message receiving sub-unit 1001B in embodiments of a device shown in Fig. 13 may be included in embodiments of a device shown in Figs. 11-12, the present invention is not limited in the context.

As shown in Fig. 14, Fig. 14 is a block diagram illustrating another device for heating a tank of an induction cooking equipment according to an exemplary embodiment. Based on the foregoing embodiment shown in Fig. 10, when the surface of the tank comprises a physical structure corresponding to its own material type, the determination unit 1001 may include a type detection sub-unit 1001C. The type detection sub-unit 1001C is configured to detect a physical structure of a surface of the tank by a detection structure in an equipment body of the induction cooking equipment after the tank is installed into the equipment body so as to determine the material type of the tank.

It's to be noted that the type detection sub-unit 1001C in embodiment of a device shown in Fig. 14 may be included in embodiments of a device shown in Figs. 11-13, the present invention is not limited in the context.

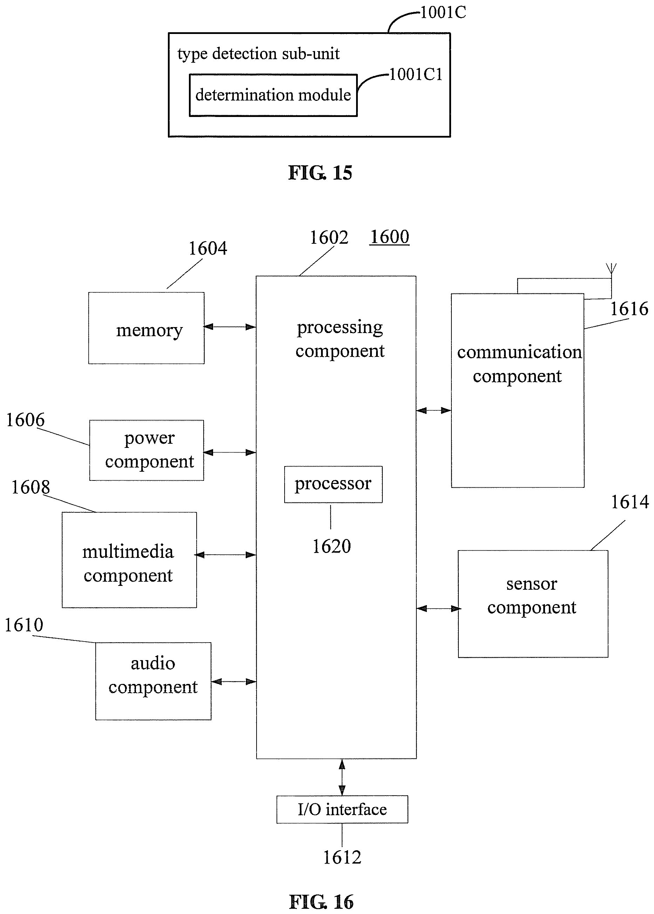

As shown in Fig. 15, Fig. 15 is a block diagram illustrating another device for heating a tank of an induction cooking equipment according to an exemplary embodiment. Based on the foregoing embodiment shown in Fig. 10, the physical structure is a bulge structure on the bottom of the tank, the material type corresponding to the location of the bulge structure on the bottom of the tank; the detection structure is a plurality of sunken structures on the bottom of the inside of the equipment body, and the plurality of sunken structures matching with bulge structures corresponding to a plurality of material types respectively; the type detection sub-unit 1001C may include a determination module 1001C1. The determination module 1001C1 is configured to determine a corresponding material type according to a sunken structure in the detection structure matching with a bulge structure on the bottom of the tank after the tank is installed into the equipment body of the induction cooking equipment.

With respect to the devices in above embodiments, specific manners in which respective modules perform operations have been described in detail in embodiments related to methods, which will not be elaborated herein.

For embodiments of the device, since they correspond to embodiments of the method, reference can be made to the description in embodiments of the method. The embodiments of the device described above are only illustrative. The unit described as a separate component may be or may not be separate physically. The component shown as a unit may be or may not be a physical unit, namely, the component may be located in a place or may be distributed over a plurality of network units. Part or all of the modules can be selected according to actual demand, so as to achieve the goal of the solutions of the present invention. An ordinary skilled person in the art can appreciate and practice the embodiments without creative work.

Accordingly, a device for heating a tank of an induction cooking equipment is further provided in the present invention, comprising: a processor; a memory for storing processor-executable instructions; wherein the processor is configured to: determine a material type of a tank; and select a voltage change curve matching with the material type for use in a cooking process of an induction cooking equipment which the tank belongs to.

Accordingly, a terminal is further provided in the present invention, comprising: a memory; and one or more programs, wherein one or more programs are stored in the memory and are configured to be executed by one or more processors, one or more programs comprising instructions for performing the following operations: determining a material type of a tank; and selecting a voltage change curve matching with the material type for use in a cooking process of an induction cooking equipment which the tank belongs to.

Fig. 16 is a block diagram of an device 1600 for heating a tank of an induction cooking equipment according to an exemplary embodiment. For example, the device 1600 may be a mobile phone, a computer, a digital broadcast terminal, a messaging device, a gaming console, a tablet, a medical device, an exercise equipment, a personal digital assistant, and the like.

Referring to Fig. 16, the device 1600 may include one or more of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the device 1600, such as the operations associated with display, telephone calls, data communications, camera operations, and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the device 1600. The power component 1606 may include a power management system, one or more power sources, and any other components associated with the generation, management, and distribution of power for the device 1600.

The multimedia component 1608 includes a screen providing an output interface between the device 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and the rear camera may receive an external multimedia datum while the device 1600 is in an operation mode, such as a photographing mode or a video mode. Each of the front camera and the rear camera may be a fixed optical lens system or have optical focusing and zooming capability.

The audio component 1610 is configured to output and/or input audio signals. For example, the audio component 1610 includes a microphone ("MIC") configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, the peripheral interface modules being, for example, a keyboard, a click wheel, buttons, and the like. The buttons may include, but are not limited to, a home button, a volume button, a starting button, and a locking button.

The sensor component 1614 includes one or more sensors to provide status assessments of various aspects of the device 1600. For instance, the sensor component 1614 may detect an open/closed status of the device 1600, relative positioning of components (e.g., the display and the keypad, of the device 1600), a change in position of the device 1600 or a component of the device 1600, a presence or absence of user contact with the device 1600, an orientation or an acceleration/deceleration of the device 1600, and a change in temperature of the device 1600. The sensor component 1614 may include a proximity sensor configured to detect the presence of a nearby object without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the device 1600 and other devices. The device 1600 can access a wireless network based on a communication standard, such as WiFi, 2G, or 3G, or a combination thereof. In an exemplary embodiment, the communication component 1616 receives a broadcast signal or broadcast associated information from an external broadcast management system via a broadcast channel. In an exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1604, executable by the processor 1620 in the device 1600, for performing the above-described methods. For example, the non-transitory computer-readable storage medium may be a ROM, a RAM, a CD-ROM, a magnetic tape, a floppy disc, an optical data storage device, and the like..

Other embodiments of the invention will be apparent to those skilled in the art from consideration of the specification and practice of the inventions herein. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for heating a tank (900) of an induction cooking equipment, performed by an induction cooking equipment, **characterized in that** the method comprises:
determining (502) a material type of a tank; and
selecting (504) a voltage change curve matching with the material type for use in a cooking process of the induction cooking equipment which the tank (900) belongs to;
wherein the surface of the tank comprises a physical structure corresponding to its own material type, the step of determining (504) a material type of the tank comprising:
detecting a physical structure of a surface of the tank by a detection structure in an equipment body (940) of the induction cooking equipment after the tank is installed into
the equipment body so as to determine the material type of the tank;
wherein the physical structure is a bulge structure (910) on the bottom of the tank, the material type corresponding to the location of the bulge structure on the bottom of the tank; the detection structure is a plurality of sunken structures (920,930) on the bottom of the inside of the equipment body, and the plurality of sunken structures matching with bulge structures corresponding to a plurality of material types respectively;
the step of detecting a physical structure of the surface of the tank by a detection structure in an equipment body comprising:
determining a corresponding material type according to a sunken structure in the detection structure matching with a bulge structure on the bottom of the tank after the tank is installed into the equipment body of the induction cooking equipment.

2. The method of claim 1, wherein the voltage change curve is generated according to received configuration instructions or is downloaded from a server.

3. A device for heating a tank (900) of an induction cooking equipment, **characterized in that** the device comprises:
a determination unit (1001) configured to determine a material type of a tank; and
a selection unit (1002) configured to select a voltage change curve matching with the material type for use in a cooking process of the induction cooking equipment which the tank belongs to;
wherein the surface of the tank comprises a physical structure corresponding to its own material type, the determination unit (1001) comprising:
a detection sub-unit (1001C) configured to detect a physical structure of a surface of the tank by a detection structure in an equipment body (940) of the induction cooking equipment after the tank is installed into the equipment body so as to determine the material type of the tank;
wherein the physical structure is a bulge structure (910) on the bottom of the tank, the material type corresponding to the location of the bulge structure on the bottom of the tank; the detection structure is a plurality of sunken structures (920,930) on the bottom of the inside of the equipment body, and the plurality of sunken structures matching with bulge structures corresponding to a plurality of material types respectively;
the detection sub-unit (1001C) comprising:
a determination module (1001C1) configured to determine a corresponding material type according to a sunken structure in the detection structure matching with a bulge structure on the bottom of the tank after the tank is installed into the equipment body of the induction cooking equipment.

4. The device of claim 3, wherein the voltage change curve is generated according to received configuration instructions or is downloaded from a server.

5. A computer program comprising instructions for executing the steps of a method for heating a tank of an induction cooking equipment according to claim 1 or 2 when said program is executed by a computer.

6. A recording medium readable by a computer and having recorded thereon a computer program including instructions for executing the steps of a method for heating a tank of an induction cooking equipment according to claim 1 or 2.

## Patentansprüche

1. Verfahren zum Erwärmen eines Tanks (900) einer Induktionskochausrüstung, das von einer Induktionskochausrüstung durchgeführt wird, **dadurch gekennzeichnet, dass** das Verfahren umfasst:
Bestimmen (502) eines Materialtyps eines Tanks und
Auswählen (504) einer Spannungsänderungskurve, die zu dem Materialtyp passt, zur Verwendung in einem Kochprozess der Induktionskochausrüstung, zu der der Tank (900) gehört,
wobei die Oberfläche des Tanks eine physische Struktur umfasst, die ihrem eigenen Materialtyp entspricht, wobei der Schritt des Bestimmens (504) eines Materialtyps des Tanks umfasst:
Erkennen einer physischen Struktur einer Oberfläche des Tanks durch eine Erkennungsstruktur in einem Ausrüstungskörper (940) der Induktionskochausrüstung, nachdem der Tank in den Ausrüstungskörper installiert worden ist, um den Materialtyp des Tanks zu bestimmen,
wobei die physische Struktur eine Wölbungsstruktur (910) am Boden des Tanks ist, der Materialtyp dem Ort der Wölbungsstruktur am Boden des Tanks entspricht, die Erkennungsstruktur eine Vielzahl von vertieften Strukturen (920, 930) am Boden des Inneren des Ausrüstungskörpers ist und die Vielzahl von vertieften Strukturen zu Wölbungsstrukturen passt, die jeweils einer Vielzahl von Materialtypen entsprechen,
wobei der Schritt des Erkennens einer physischen Struktur der Oberfläche des Tanks durch eine Erkennungsstruktur in einem Ausrüstungskörper umfasst:
Bestimmen eines entsprechenden Materialtyps gemäß einer vertieften Struktur in der Erkennungsstruktur, die zu einer Wölbungsstruktur am Boden des Tanks passt, nachdem der Tank in den Ausrüstungskörper der Induktionskochausrüstung installiert worden ist.

2. Verfahren nach Anspruch 1, wobei die Spannungsänderungskurve gemäß empfangenen Konfigurationsanweisungen erzeugt wird oder von einem Server heruntergeladen wird.

3. Vorrichtung zum Erwärmen eines Tanks (900) einer Induktionskochausrüstung, **dadurch gekennzeichnet, dass** die Vorrichtung umfasst:
eine Bestimmungseinheit (1001), die dazu ausgestaltet ist, einen Materialtyp eines Tanks zu bestimmen, und
eine Auswahleinheit (1002), die dazu ausgestaltet ist, eine zu dem Materialtyp passende Spannungsänderungskurve zur Verwendung in einem Kochprozess der Induktionskochausrüstung, zu der der Tank gehört, auszuwählen,
wobei die Oberfläche des Tanks eine seinem eigenen Materialtyp entsprechende physische Struktur umfasst, wobei die Bestimmungseinheit (1001) umfasst:
eine Erkennungsuntereinheit (1001C), die dazu ausgestaltet ist, eine physische Struktur einer Oberfläche des Tanks durch eine Erkennungsstruktur in einem Ausrüstungskörper (940) der Induktionskochausrüstung zu erkennen, nachdem der Tank in den Ausrüstungskörper installiert worden ist, um den Materialtyp des Tanks zu bestimmen,
wobei die physische Struktur eine Wölbungsstruktur (910) am Boden des Tanks ist, der Materialtyp dem Ort der Wölbungsstruktur am Boden des Tanks entspricht, die Erkennungsstruktur eine Vielzahl von vertieften Strukturen (920, 930) am Boden des Inneren des Ausrüstungskörpers ist und die Vielzahl von vertieften Strukturen zu Wölbungsstrukturen passt, die jeweils einer Vielzahl von Materialtypen entsprechen,
wobei die Erkennungsuntereinheit (1001C) umfasst:
ein Bestimmungsmodul (1001C1), das dazu ausgestaltet ist, einen entsprechenden Materialtyp gemäß einer vertieften Struktur in der Erkennungsstruktur zu bestimmen, der zu einer Wölbungsstruktur am Boden des Tanks passt, nachdem der Tank in den Ausrüstungskörper der Induktionskochausrüstung installiert worden ist.

4. Vorrichtung nach Anspruch 3, wobei die Spannungsänderungskurve gemäß empfangenen Konfigurationsanweisungen erzeugt wird oder von einem Server heruntergeladen wird.

5. Computerprogramm, umfassend Anweisungen zum Ausführen der Schritte eines Verfahrens zum Erwärmen eines Tanks einer Induktionskochausrüstung nach Anspruch 1 oder 2, wenn das Programm von einem Computer ausgeführt wird.

6. Aufzeichnungsmedium, das von einem Computer gelesen werden kann und auf dem ein Computerprogramm mit Anweisungen zum Ausführen der Schritte eines Verfahrens zum Erwärmen eines Tanks einer Induktionskochausrüstung nach Anspruch 1 oder 2 aufgezeichnet ist.

## Revendications

1. Procédé de chauffage d'un réservoir (900) d'un équipement de cuisson par induction, exécuté par un équipement de cuisson par induction, **caractérisé en ce que** le procédé comprend :
la détermination (502) d'un type de matériau d'un réservoir ; et
la sélection (504) d'une courbe de changement de tension qui correspond au type de matériau utilisé dans un processus de cuisson de l'équipement de cuisson par induction auquel le réservoir (900) appartient ;
dans lequel la surface du réservoir comprend une structure physique correspondant à son propre type de matériau, l'étape de détermination (504) d'un type de matériau du réservoir comprenant :
la détection d'une structure physique d'une surface du réservoir par une structure de détection dans un corps d'équipement (940) de l'équipement de cuisson par induction après que le réservoir a été installé dans le corps d'équipement de façon à déterminer le type de matériau du réservoir ;
dans lequel la structure physique est une structure de renflement (910) du fond du réservoir, le type de matériau correspondant à l'emplacement de la structure de renflement sur le fond du réservoir ; la structure de détection est une pluralité de structures creuses (920, 930) sur le fond de l'intérieur du corps d'équipement, et la pluralité de structures creuses correspondant aux structures de renflement correspondant à une pluralité de types de matériaux, respectivement ;
l'étape de détection d'une structure physique de la surface du réservoir par une structure de détection dans un corps d'équipement comprenant :
la détermination d'un type de matériau correspondant selon une structure creuse dans la structure de détection correspondant à une structure de renflement sur le fond du réservoir après que le réservoir a été installé dans le corps d'équipement de l'équipement de cuisson par induction.

2. Procédé selon la revendication 1, dans lequel la courbe de changement de tension est générée selon des instructions de configuration reçues ou est téléchargée depuis un serveur.

3. Dispositif de chauffage d'un réservoir (900) d'un équipement de cuisson par induction, **caractérisé en ce que** le dispositif comprend :
une unité de détermination (1001) configurée pour déterminer un type de matériau d'un réservoir ; et
une unité de sélection (1002) configurée pour sélectionner une courbe de changement de tension correspondant au type de matériau utilisé dans un processus de cuisson de l'équipement de cuisson par induction auquel le réservoir appartient ;
dans lequel la surface du réservoir comprend une structure physique correspondant à son propre type de matériau, l'unité de détermination (1001) comprenant :
une sous-unité de détection (1001C) configurée pour détecter une structure physique d'une surface du réservoir par une structure de détection dans un corps d'équipement (940) de l'équipement de cuisson par induction après que le réservoir a été installé dans le corps d'équipement de façon à déterminer le type de matériau du réservoir ;
dans lequel la structure physique est une structure de renflement (910) sur le fond du réservoir, le type de matériau correspondant à l'emplacement de la structure de renflement sur le fond du réservoir ; la structure de détection est une pluralité de structures creuses (920, 930) sur le fond de l'intérieur du corps d'équipement, et la pluralité de structures creuses correspondant aux structures de renflement correspondant à une pluralité de types de matériaux, respectivement ;
la sous-unité de détection (1001C) comprenant :
un module de détermination (1001C1) configuré pour déterminer un type de matériau correspondant selon une structure creuse dans la structure de détection correspondant à une structure de renflement sur le fond du réservoir après que le réservoir a été installé dans le corps d'équipement de l'équipement de cuissojn par induction.

4. Dispositif selon la revendication 3, dans lequel la courbe de changement de tension est générée selon des instructions de configuration reçues ou est téléchargée depuis un serveur.

5. Programme informatique comprenant des instructions destinées à exécuter les étapes d'un procédé de chauffage d'un réservoir d'un équipement de cuisson par induction selon la revendication 1 ou 2 lorsque ledit programme est exécuté par un ordinateur.

6. Support d'enregistrement lisible par un ordinateur et stockant un programme informatique comprenant des instructions destinées à exécuter les étapes d'un procédé de chauffage d'un réservoir d'un équipement de cuisson par induction selon la revendication 1 ou 2.
